# EUROPEAN PATENT APPLICATION

(11) **EP 2 955 964 A1**
(43) Date of publication of application: **16.12.2015**
(21) Application number: 15161350.2
(22) Date of filing: 09.03.2012
(51) Int. Cl.: H04W 48/08, H04W 28/04, H04W 88/08

(54) **METHOD AND APPARATUS FOR HANDLING BURSTY NETWORK ENTRY AND RE-ENTRY IN MACHINE TO MACHINE NETWORKS**

(30) Priority: 11.03.2011 US 201161451852 P
(62) Divisional of application: 12710412.3
(71) Applicant: Interdigital Patent Holdings, Inc., Wilmington, DE 19809 (US)
(72) Inventor: Wang, Lei, San Diego, CA 92130 (US); Murias, Ronald G., Calgary, Alberta T3A 0V2 (CA); Seed, Dale N., Allentown, PA 18104 (US); Pinheiro, Ana Lucia, Hillsboro, OR 97124 (US); Grandhi, Sudheer A., Pleasanton, CA 94588 (US)
(74) Representative: Grönlund, Tim Linus Wilhelm

(57) **Abstract**

A method and apparatus may be used for handling bursty network entry and re-entry in M2M networks. For example, a base station(BS) may receive a trigger from at least one device associated with the BS. The at least one device may be a wireless transmit/receive unit (WTRU), or it may be a network device. The BS may determine whether a widespread exception is imminent based on the trigger. If a widespread exception is imminent, the BS may transmit an indication to the at least one device. The indication may indicate to the at least one device that the BS has received a widespread exception report. The WTRU may receive the indication, and terminate a network entry procedure in response to the indication. The WTRU may enter a power saving mode in response to the indication.

## Description

### CROSS REFERENCE TO RELATED APPLICATIONS

This application claims the benefit of U.S. provisional application No. 61/451,852 filed on March 11, 2011, the contents of which are hereby incorporated by reference.

### BACKGROUND

Communication systems for Machine-to-Machine (M2M) applications is an emerging market. M2M applications may cover a wide range of use cases, for example, health care, smart metering, industrial remote maintenance and control, tracking, tracing and recovery, secured access and surveillance, public safety, consumer devices, retail, payment, and home/building automation. Some special traffic characteristics may be identified as commonly seen in multiple M2M applications, although traffic characteristics generally may vary with each M2M use case. For example, for regular monitoring and reporting in M2M applications the data traffic may be characterized as periodic, having small-size bursts, for example, <=100 bytes, a high tolerance in latency for end-to-end delivery and acknowledgement. This latency may be, for example, seconds, minutes, hours, or days, for a large number of M2M devices, for example, 5,000 to 30,000 smart meters in a typical cell size of 0.5km to 2km in urban areas having a very low duty cycle with significant idle time. Therefore, the communication systems for the M2M applications may face new challenges to efficiently transport data traffic.

In addition to the regular monitoring and reporting of M2M traffic, real-time M2M traffic data also exists, for example, alert or alarm reporting. Handling such real-time traffic from a large number of devices may pose new challenges to the M2M communication systems, since the devices may be low latency, and the transmissions may be non-periodic and have large burst sizes.

Furthermore, in many cases the communications for M2M applications may be introduced as new added-on application layer services to some existing communication systems, for example, the wireless access networks currently deployed for cellular phones, or computers. Also, it may be unlikely that new communication systems will be deployed to support M2M applications and other applications. Therefore, it is important to carefully consider how to support the M2M traffic in networks while also supporting non-M2M traffic.

### SUMMARY

A method and apparatus may be used for handling bursty network entry and re-entry in M2M networks. For example, a base station (BS) may receive a trigger from at least one device associated with the BS. The at least one device may be a wireless transmit/receive unit (WTRU), or it may be a network device. The BS may determine whether a widespread exception is imminent based on the trigger. If a widespread exception is imminent, the BS may transmit an indication to the at least one device. The indication may indicate to the at least one device that the BS has received a widespread exception report. The WTRU may receive the indication, and terminate a network entry procedure in response to the indication. The WTRU may enter a power saving mode in response to the indication.

### BRIEF DESCRIPTION OF THE DRAWINGS

A more detailed understanding may be had from the following description, given by way of example in conjunction with the accompanying drawings wherein:
FIG. 1A is a system diagram of an example communications system in which one or more disclosed embodiments may be implemented;
FIG. 1B is a system diagram of an example wireless transmit/receive unit (WTRU) that may be used within the communications system illustrated in FIG. 1A;
FIG. 1C is a system diagram of an example radio access network and an example core network that may be used within the communications system illustrated in FIG. 1A;
FIG. 2 is a diagram of an example method for reporting a critical widespread exception;
FIG. 3 is a diagram of an example method for use in an M2M device;
FIG 4 is a diagram of an example method for performing network entry/re-entry based on a dedicated random access (RA) opportunity;
FIG 5 is a diagram of an example method for polling-based network entry/re-entry;
FIG 6 is a diagram of an example method for performing a system notification of a network entry flood;
FIG 7 is a diagram of an example method for performing a network entry/re-entry; and
FIG 8 is a diagram of another example method for performing a network entry/re-entry.

### DETAILED DESCRIPTION

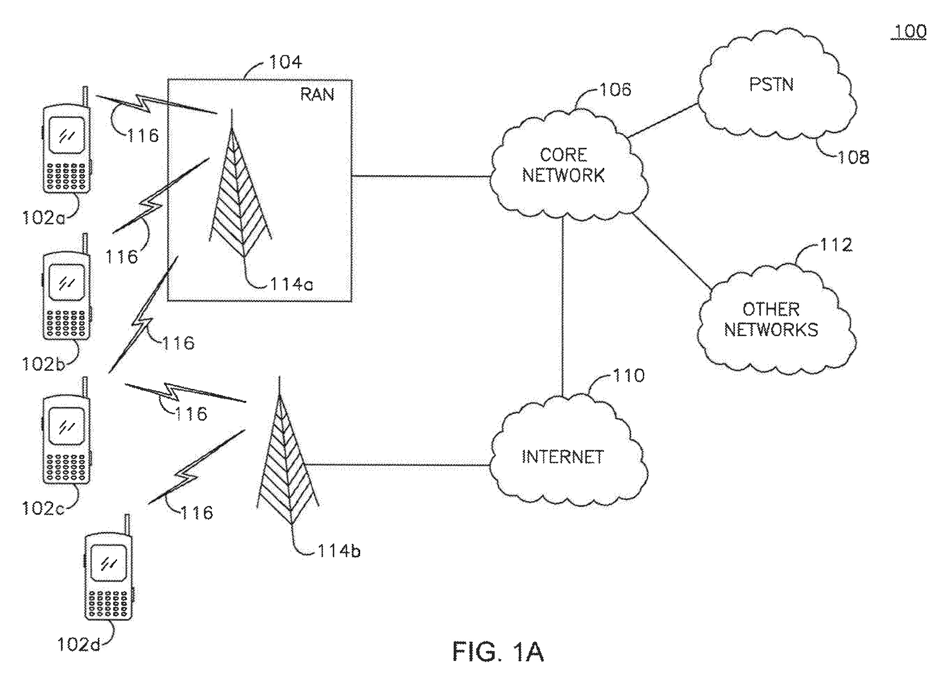

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station (MS), a station (STA) a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, a station (STA), and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

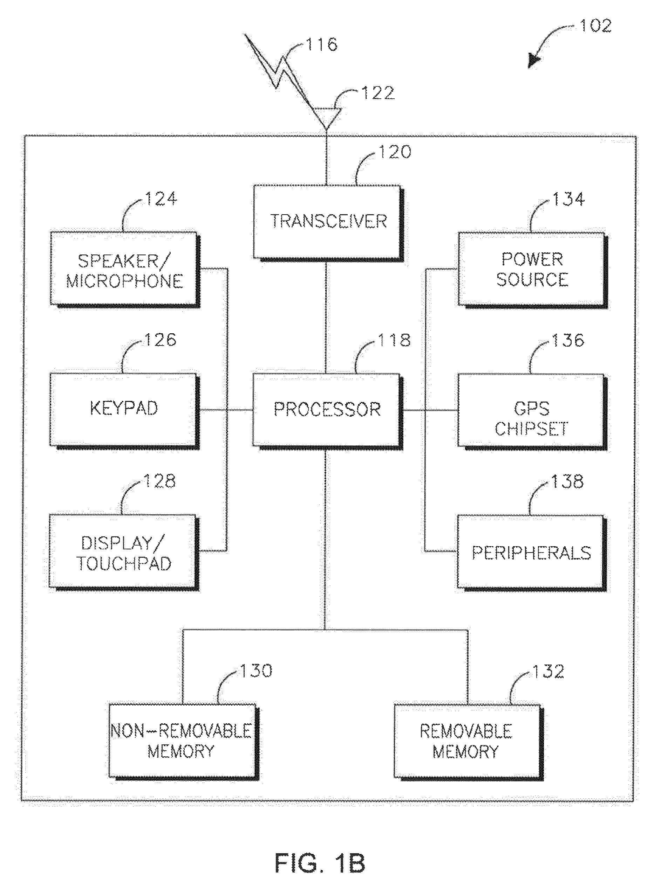

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

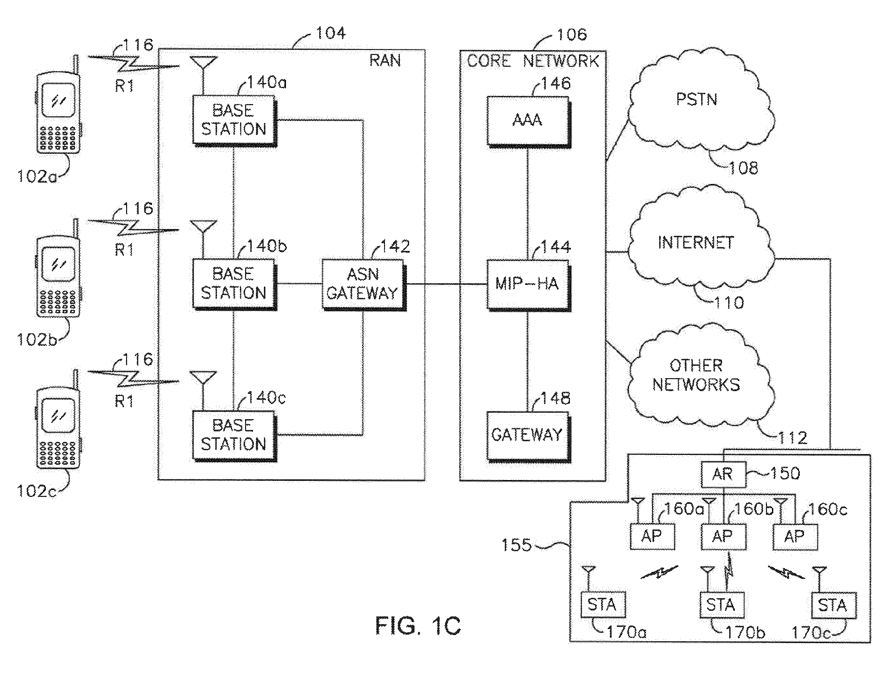

FIG. 1C is a system diagram of the RAN 104 and the core network 106 according to an embodiment. The RAN 104 may be an access service network (ASN) that employs IEEE 802.16 radio technology to communicate with the WTRUs 102a, 102b, 102c over the air interface 116. As will be further discussed below, the communication links between the different functional entities of the WTRUs 102a, 102b, 102c, the RAN 104, and the core network 106 may be defined as reference points.

As shown in FIG. 1C, the RAN 104 may include base stations 140a, 140b, 140c, and an ASN gateway 142, though it will be appreciated that the RAN 104 may include any number of base stations and ASN gateways while remaining consistent with an embodiment. The base stations 140a, 140b, 140c may each be associated with a particular cell (not shown) in the RAN 104 and may each include one or more transceivers for communicating with the WTRUs 102a, 102b, 102c over the air interface 116. In one embodiment, the base stations 140a, 140b, 140c may implement MIMO technology. Thus, the base station 140a, for example, may use multiple antennas to transmit wireless signals to, and receive wireless signals from, the WTRU 102a. The base stations 140a, 140b, 140c may also provide mobility management functions, such as handoff triggering, tunnel establishment, radio resource management, traffic classification, quality of service (QoS) policy enforcement, and the like. The ASN gateway 142 may serve as a traffic aggregation point and may be responsible for paging, caching of subscriber profiles, routing to the core network 106, and the like.

The air interface 116 between the WTRUs 102a, 102b, 102c and the RAN 104 may be defined as an R1 reference point that implements the IEEE 802.16 specification. In addition, each of the WTRUs 102a, 102b, 102c may establish a logical interface (not shown) with the core network 106. The logical interface between the WTRUs 102a, 102b, 102c and the core network 106 may be defined as an R2 reference point, which may be used for authentication, authorization, IP host configuration management, and/or mobility management.

The communication link between each of the base stations 140a, 140b, 140c may be defined as an R8 reference point that includes protocols for facilitating WTRU handovers and the transfer of data between base stations. The communication link between the base stations 140a, 140b, 140c and the ASN gateway 215 may be defined as an R6 reference point. The R6 reference point may include protocols for facilitating mobility management based on mobility events associated with each of the WTRUs 102a, 102b, 100c.

As shown in FIG. 1C, the RAN 104 may be connected to the core network 106. The communication link between the RAN 104 and the core network 106 may defined as an R3 reference point that includes protocols for facilitating data transfer and mobility management capabilities, for example. The core network 106 may include a mobile IP home agent (MIP-HA) 144, an authentication, authorization, accounting (AAA) server 146, and a gateway 148. While each of the foregoing elements are depicted as part of the core network 106, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 144 may provide the WTRUs 102a, 102b, 102c with access to packet-switched networks, such as the Internet 110, to facilitate communications between the WTRUs 102a, 102b, 102c and IP-enabled devices. The AAA server 146 may be responsible for user authentication and for supporting user services. The gateway 148 may facilitate interworking with other networks. For example, the gateway 148 may provide the WTRUs 102a, 102b, 102c with access to circuit-switched networks, such as the PSTN 108, to facilitate communications between the WTRUs 102a, 102b, 102c and traditional land-line communications devices. In addition, the gateway 148 may provide the WTRUs 102a, 102b, 102c with access to the networks 112, which may include other wired or wireless networks that are owned and/or operated by other service providers. An access router (AR) 150 of a wireless local area network (WLAN) 155 may be in communication with the Internet 110. The AR 150 may facilitate communications between APs 160a, 160b, and 160c. The APs 160a, 160b, and 160c may be in communication with STAs 170a, 170b, and 170c.

Although not shown in FIG. 1C, it will be appreciated that the RAN 104 may be connected to other ASNs and the core network 106 may be connected to other core networks. The communication link between the RAN 104 the other ASNs may be defined as an R4 reference point, which may include protocols for coordinating the mobility of the WTRUs 102a, 102b, 102c between the RAN 104 and the other ASNs. The communication link between the core network 106 and the other core networks may be defined as an R5 reference, which may include protocols for facilitating interworking between home core networks and visited core networks.

In many machine-to-machine (M2M) applications, for example, smart metering, surveillance monitoring, public safety, the normal operation of M2M devices may be periodically monitoring and reporting, where the reporting operation may require the M2M devices to access the data communication network. From the viewpoint of the network interface, for example, the air interface of the device to the base station (BS) in a wireless access network, the M2M device may alternate between a connected state and an idle state. When in the connected state, an M2M device may be connected to the BS through the air interface and the data traffic may be transported over an air link between the BS and the device. When in the idle state, the air interface of the M2M device may not be active, for example, the air interface may not be available to the BS for normal data exchanges. Depending on the M2M application, the periodicity of the M2M reporting operations may cause a fairly low duty cycle of the network interface of the M2M device, for example, remaining in an idle state. In an access network supporting a large number of M2M devices, a low duty cycle of each individual M2M device may result in most of the devices operating in the idle state at a given point in time.

When a plurality of M2M devices are in an idle state, a widespread exception event, for example, caused by a power outage, a leaking pipeline, a broken pipeline, or a terrorist attack, may result in a very bursty network entry/re-entry demand scenario. In another example, a widespread exception event may be an event that will result in the plurality of devices in communication with the BS losing communication with the BS. These example widespread exception events may result in an overload to the system with respect to its capability of handling network entry/re-entry. Such a scenario may cause system congestion and even system failure, particularly when a contention-based network access, also called random access (RA), procedure is used, which may be a common initial network access mechanism to initiate network entry/re-entry. In the following examples, the term network entry/re-entry may include network entry and/or network re-entry.

For example, the contention-based network access capability may be designed to handle N RA requests per second under normal network operating conditions. In the event of a widespread exception, a large number of M2M devices in an idle state may attempt to transmit a message and enter a connected state in order to report a system exception, which may result in a large number of M2M devices using contention-based access to initiate their network re-entry process. The number of M2M devices may be much larger than N. Therefore, the RA channels for the network entry/re-entry may be highly congested with many collisions, resulting in no chance or an extremely low chance for any of the devices to successfully re-enter the network. RA channel congestion may not only cause failures in the system exception reporting of the M2M application, but also may significantly and negatively impact the operation of other applications supported by the same access network.

In the event of a widespread exception, and after the system is recovered from the exception, there may be another burst of network entry/re-entry attempts. This may be due to a large number of M2M devices attempting to quickly go back to their normal operational duty cycle by first connecting to the network. For example, in the event of a system power outage, when the power returns, all the devices may power on and start again. During the initialization procedure, the devices may attempt to connect to the access system to initialize their network interface to enter into a normal operational mode. In this case, the attempts of network entry/re-entry may be highly synchronized from a large number of M2M devices and may increase the likelihood of network congestion.

Another example of a bursty network entry/re-entry scenario may occur after a system reboot. A large number of subscriber stations, including M2M devices and/or other subscribers, may attempt to enter the network at the same time. On the other hand, if a system is designed to handle bursty network entry/re-entry demands, it may push to an over-design for the system, which may result in poor system utilization and inefficiency for normal network operations.

A system indication message may be used to report a critical widespread exception event. The system indication message may indicate that the BS is aware of a widespread system error. Upon receiving one or more critical real-time widespread exception reports, the BS may transmit a system indication message to all devices, and upon receiving the system indication message from the BS, the devices may perform certain actions, for example terminate their RA attempts such that congestion at the network entry/re-entry RA channels may be effectively controlled. The system indication message may be transmitted to one or more M2M devices to alert the M2M devices to cease transmitting event indication messages to avoid reporting the same error.

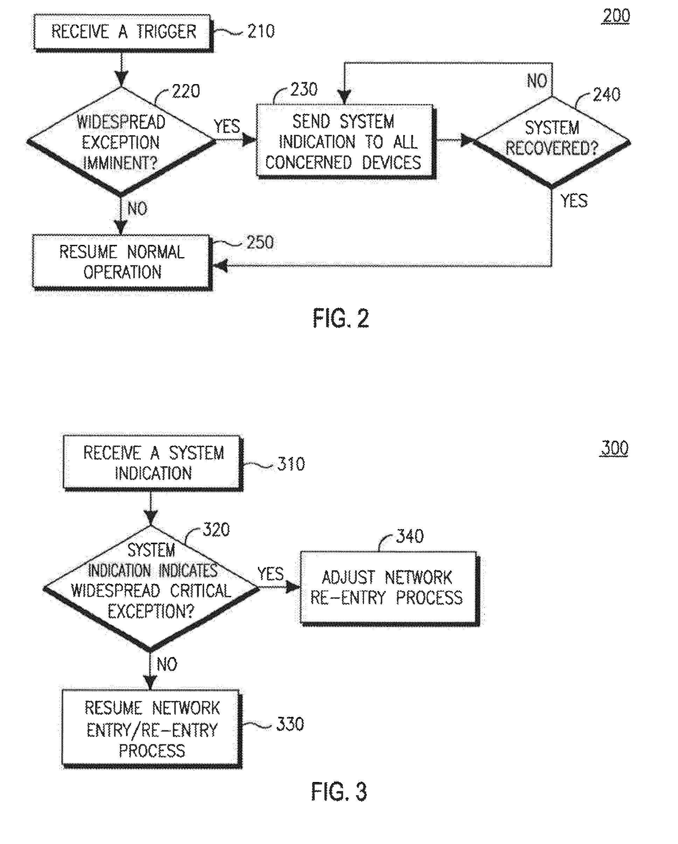

Figure 2 is a diagram of an example method 200 for reporting a critical widespread exception. Referring to Figure 2, the BS may receive a trigger 210, for example an event indication message or a critical real-time exception report. Based on the received trigger, the BS may detect that it is about to experience a widespread exception 220 and transmit a system indication message to all the concerned devices 230. The system indication message may be transmitted to report a system wide critical exception so that the devices that are still attempting to enter the network to report the same system exception may take certain actions to reduce the loading on the network entry channels.

If the BS determines that the system has not recovered 240, a system indication message may be transmitted repeatedly with a selected periodicity until the network entry/re-entry RA channel congestion is under control or until the system is recovered from the critical widespread exception. When the BS determines that the system has recovered 240, it may resume normal operation 250. The BS may determine that the system has recovered based on no longer detecting collisions on the RA channel, or the number of collisions on the RA channel is within a tolerable limit. Another example of the BS determining that the system has recovered may be based on receiving a message from a server on the network side, for example, an M2M application server, that indicates that the system has recovered.

An example trigger for the BS to transmit a system indication message to the M2M devices may be that the BS has received a critical widespread exception report. Such critical widespread exceptions may be pre-defined/configured by the M2M applications. In addition, the M2M application system elements, including the BS and M2M devices in the access networks, may dynamically learn, update, and maintain the information regarding critical widespread exceptions, during the utilization of the M2M applications.

In addition, other trigger conditions may also be defined for the BS to transmit a system indication message to the M2M devices. For example, another trigger for transmitting a system indication message may be based on receiving repetitious reports from a pre-determined number of M2M devices within a pre-determined window of time. For example, a threshold, which may be static or configurable, may be defined. If the number of messages received of a same type within a pre-determined time period is exceeded, the system indication message may be transmitted to the concerned devices. For example, if the BS receives ten reports of an emergency condition, the BS may transmit a system indication message of that message so that the other M2M devices do not send the same report to the BS. The concerned devices may include either all devices or a sub-group of devices. One example of the received message may be a ranging request message with the ranging purpose field set to "abnormal power outage." Another example of the received message may be a group of ranging codes that may be reserved for system exception report ranging. When the BS receives such codes exceeding a predefined number within a predefined time window, the BS may detect a widespread system error.

In an example of a system under an extreme load with a large number of collisions, grouped RA codes may allow the BS to acknowledge an issue without being able to fully decode the collided RA codes. For example, when multiple devices attempt to report the same widespread exception, those devices may be considered a group. The group may be associated with the type of device, for example a meter. The exception reported by the group, for example a power outage, may include a device type and reported exception.

The RA code used to report an exception may be designed and/or selected based on the device ID and/or the group. If the devices reporting the widespread exception have a common component of the RA ID, a collision may render the individual device IDs unreadable. However, if the codes include a common group component, the group identification component of the RA code may still be decodable.

In the event of a widespread exception reported by many devices, the group component of the RA code may allow the BS to recognize the reporting group. The BS may be aware of the widespread exception, and transmit a system indication message to indicate that the BS has received this widespread exception report. This system indication message may allow the devices to take action as required, for example terminate RA attempts. A critical widespread exception report may be transmitted to the BS over the air link by the M2M devices that have detected the system exception or by other entities in the M2M applications system, for example an M2M server or an M2M gateway.

Figure 3 is a diagram of an example method 300 for use in an M2M device. Referring to Figure 3, the M2M device may receive a system indication message 310 from a BS. The M2M device may determine whether the system indication message indicates a widespread critical exception. 320. If a widespread critical exception is not detected, the M2M device may resume its network entry/re-entry process 330.

If a widespread critical exception is detected, the M2M device may adjust its network entry/re-entry process 340. Examples for adjusting a network entry/re-entry process may include terminating the network entry/re-entry process, or randomly deciding whether to continue the network entry/re-entry attempts with a pre-specified probability of continuation or termination. For example, the devices may apply a 1/1000 probability to continue network entry/re-entry attempts and 999/1000 to terminate network entry/re-entry attempts.

M2M devices may detect a critical widespread exception event and may attempt to report to the M2M server through the BS of the access network. The BS may need to correctly receive the critical widespread exception report from at least one or multiple M2M devices before it transmits a system indication message acknowledging awareness of the system exception to the M2M devices. A widespread exception may cause system congestion and even failure due to a large number of M2M devices attempting to enter/re-enter the network. Therefore, in order to improve efficiency, some mechanisms may be used to help one or more M2M devices to successfully and timely report a critical widespread exception. The report of the critical widespread exception may be transmitted before or during the congestion or failure, and may be transmitted in the normal RA channels for network entry/re-entry. Reporting the critical widespread exception in this manner may take advantage of the M2M devices in a connected state.

After the system recovers from the critical widespread exception, due to actions taken by any responsible entities of the M2M applications, the M2M devices may report data collected regarding the system exception to the BS and/or M2M servers. Such a post-system-recovery report may be encoded in the network interface control and/or management messages, for example MAC messages in the air interface. Alternatively, this information may also be conveyed using an M2M application layer services message between the M2M device and the BS, or between the M2M device and an M2M server or gateway. The information fields in a post-system-recovery message may include: an indicator that indicates whether or not the device experienced a system critical exception; and identification or description information about the experienced exception, for example which system exception, time and location when experienced.

A priority alarm message (PAM) may be used to indicate events that may need immediate attention. A device may generate a priority alarm in the event of a critical widespread exception. The PAM may be transmitted via multicast or broadcast messages. The specific method to broadcast such information may include many examples.

In a first example, the network may multicast/broadcast an indication that a PAM was received by a device in the same cell or in the same location area, for example a routing area update/tracking area update (RAU/TAU). The devices may then determine whether or not they would still transmit their PAM.

In a second example, the network may multicast/broadcast an indication that a PAM was received by a device in the same cell or in the same location area, for example a RAU/TAU together with an indication of the intent or cause of the PAM. The cause may be a set of pre-defined values determined by the network operator, and possibly agreed with the subscribers. Based on the cause of their alarm, the devices may then determine whether or not they would still transmit their PAM.

In a third example, on a condition that the devices belong to pre-defined groups, the network may multicast/broadcast an indication that a PAM was received by a device belonging to a specific group. Based on the group to which they belong and the relationship between groups, the devices may determine whether or not they will transmit their PAM.

In a fourth example, on a condition that the devices belong to pre-defined groups, the 3GPP network may multicast or broadcast an indication that a PAM was received by a device belonging to a specific group, together with an indication of the intent or cause of the PAM. The cause may be a set of pre-defined values determined by the network operator, and agreed with the subscribers. The set of causes may be group-specific, for example, each group may have its own set of possible causes. Based on the group to which they belong, the cause of their alarm, and possibly the relationship between groups, the devices may determine whether or not they may still transmit their PAM.

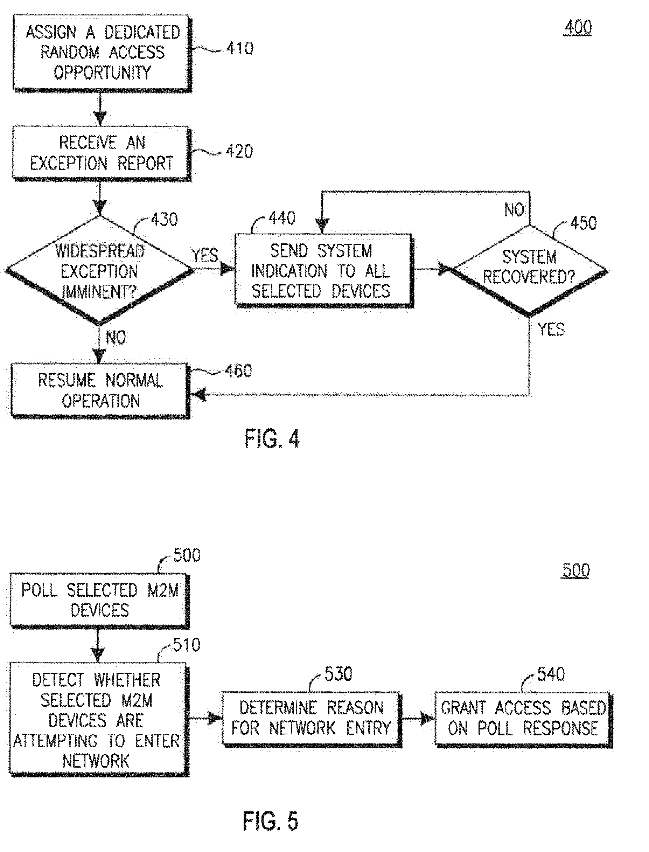

Figure 4 is a diagram of an example method 400 for performing network entry/re-entry based on a dedicated RA opportunity. Referring to Figure 4, the BS may assign a dedicated RA opportunity 410 for one or more selected M2M devices of an M2M application to report critical widespread exceptions, so that the critical widespread exceptions may be correctly reported. Such dedicated RA opportunities may be pre-assigned to selected representatives in a static or semi-static manner, or assigned dynamically upon detection of a significant amount of RA congestion. In some examples, an RA opportunity may not be assigned.

Upon receiving an exception report from one or more M2M devices 420, the BS may determine whether a widespread exception is imminent 430.If the BS determines that a widespread exception event is imminent 430, the BS may transmit a system indication message that indicates the reception of a critical widespread exception report 440. The BS may determine whether the system has recovered 450. If the system has recovered, the BS may resume normal operation 460. If the system has not recovered, the BS may transmit another system indication message 440.

The system indication message may be broadcasted to all the subscribers in the access network. In this way, the subscribers, including M2M devices and other user equipment, may be informed of congestion at the RA channels for network entry/re-entry. The subscribers may take certain actions to help avoid or control the congestion based on the system indication message. Alternatively, the BS may multicast the system indication message to one or more M2M devices, where the M2M devices may belong to the same M2M applications, for example, smart metering. A special subscriber group may be formed at the access system for the M2M devices, and the BS may multicast the system indication message to the M2M device group.

On a condition that the BS is triggered to transmit a system indication message of the reception of a critical widespread exception report, the BS may decide to transmit a system indication message repeatedly with a selected periodicity. The selected periodicity may be predetermined or it may be variable. This may occur until the congestion of the RA channel for network entry/re-entry is under control or until the system is recovered from the critical widespread exception.

A dedicated RA based network entry/re-entry may provide dedicated RA opportunities to the selected M2M devices so that they may successfully enter/re-enter the access network without experiencing collisions in the RA channel. It may ensure that critical widespread exceptions may be correctly reported to the BS and M2M servers, in the case of RA channel congestion due to access attempts from a large number of M2M devices.

An RA opportunity may generally refer to an opportunity for a subscriber to transmit an RA request. For example, an RA opportunity may be described by time, RA channel, and RA code. In other words, a subscriber may transmit an RA request to the BS at a pre-determined time period (i.e., in a time-domain) and a pre-determined channel (i.e., in a frequency domain) with a pre-determined RA code (i.e., in a code-domain).

The selection of the M2M devices to receive dedicated RA opportunity assignments may be provided by the M2M application servers, depending on a specific M2M application. The selection may also be decided by the BS of the access network randomly or based on some considerations, for example, physical locations or representative factors among the M2M devices. Some examples of considerations include, but are not limited to, selecting M2M devices based on physical characteristics such as: physical location; available output power; advanced antenna systems; advanced interference mitigation features; device storage capacity; andreported BS signal strength. Some examples of considerations include but are not limited to selecting M2M devices based on power supply such as: whether the M2M device is battery powered; powered by a grid rather than a battery; powered by a grid with an uninterruptable power supply backup; or powered off the grid with solar, wind, or any other off the grid power source.

The dedicated RA opportunities may be assigned to the selected M2M devices in a static or semi-static manner. For example, a special RA code may be reserved only for the selected M2M devices to use for their network entry/re-entry attempts for reporting a critical system-wide exception. Such a special RA code assignment may be signaled by the BS to the one or more selected M2M devices at their initial network entry. The RA code may also be changed later but not frequently.

Alternatively, the dedicated RA opportunities may be assigned to the selected M2M devices dynamically, upon detecting a high degree of congestion in the RA channels. If the BS detects power or noise in the RA channels but cannot decode it in multiple RA channels (i.e., in frequency-domain) and multiple RA allocations (i.e., in time-domain), then the BS may sense there may be congestion in the RA channels, and may trigger the assignment of one or more dedicated RA opportunities.

The assignment of dedicated RA opportunities may be encoded in the network interface control channel information elements (IEs) and/or control/management messages for example, MAP IEs and/or media access control (MAC) messages in the air interface. The assignment may be encoded in a separate new MAP IE and/or MAC message, or it may be added as a new use case in some existing MAP IE and/or MAC message. Alternatively, this information may also be encoded in an M2M application layer services message exchanged between the M2M Device and the BS or M2M server or gateway.

The assignment signal of dedicated RA opportunities to the selected M2M devices may explicitly or implicitly include the following information fields: identification information of the recipient of the dedicated RA opportunity assignment, for example, a special M2M device ID assigned in the access network specifically for network entry/re-entry procedure with dedicated RA opportunities; a 48-bit universal MAC address; or a special ID assigned to the devices in an idle state, such as the deregistration ID (DID) in 802.16m systems, IP Address, or a uniform resource identifier (URI); and description information about the dedicated RA opportunity or opportunities for example, time, RA channel, and/or RA code.

Figure 5 is a diagram of an example method 500 for polling-based network entry/re-entry. The BS may poll 510 one or more selected M2M devices of an M2M application to detect if they are attempting to enter the network. The BS may select the devices to poll in a random manner. In addition, the BS may select the devices based on available information about the devices, for example, the device types, traffic characteristics, and the like. If the BS determines that one or more selected M2M devices are attempting to enter the network 520, the BS may determine a reason for network entry/re-entry 530 based on a received poll response. Based on the reason for network entry/re-entry, the BS may grant access 540. In one example, the BS may determine to poll one or more selected M2M devises based upon a detection of congestion in an RA channel.

A poll from the BS may be a downlink (DL) message providing an uplink (UL) allocation or allocations to the selected M2M representative devices. A poll may be a unicast poll or a multicast poll, for example, the BS may poll an individual device or poll a group of devices.

With a polling-based network entry/re-entry procedure, instead of using contention-based access, a polling-based access procedure may be used to initiate the network entry/re-entry process, in which an M2M device may not transmit in the UL until it receives a poll for the network entry/re-entry process. This may be useful for the polled device to successfully enter/re-enter the access network, when the normal RA based network entry/re-entry process experiences difficulties due to RA channel congestion, for example, an overloading of the RA attempts from a large number of M2M devices in case of a critical widespread exception.

Upon detecting congestion in the RA channels for network entry/re-entry, the BS may poll one or more selected M2M devices of an M2M application to detect if they are attempting to enter to the network. The M2M device selection and RA channel congestion detection may be conducted by using similar mechanisms. A poll from the BS may be a DL signal providing an UL allocation to the selected M2M device or devices. If the UL allocation of a poll is allocated to one device, then the poll may be a unicast poll and the access to the given UL allocation may be non-contentious. If the UL allocation of a poll is allocated to multiple selected devices, then the poll may be a multicast poll and the access to the given UL allocation may be contentious or non-contentious. In one example, if only one device in the multicast poll device group is active and listening to the DL at any time due to one or more M2M application specific reasons, a multicast poll may provide a non-contentious UL allocation. A multicast poll may provide a contentious UL allocation to the devices in the multicast poll recipient group, which may be intended to be a much smaller group than the entire M2M device domain supported by the access network. One example of an M2M application specific reason may be one or more mutually exclusive activated monitors or sensors.

In one example, upon receiving a poll from the BS, an M2M device may transmit a poll response in a pre-determined UL allocation. The poll response may include an identification of the M2M device, an indication of its network entry/re-entry attempt, a reason for entering the network, and one or more UL bandwidth requests if it needs further UL transmission.

After transmitting a poll to the one or more selected M2M devices, the BS may wait for a poll response in the scheduled UL allocation. If the BS successfully receives and decodes a poll response, then the BS and the device may be connected and further data exchanges may be performed over the link to complete the network entry/re-entry process.

If the BS does not successfully receive and decode a poll response, the poll may be failed. There may be multiple reasons for a poll failure, for example, the polled device may not be actively listening to the DL, or a collision may have occurred for a multicast poll. If the BS does not detect any signals in a given poll to a device, for example, no energy on the radio channel, the BS may determine that the polled device did not transmit in the given poll. If the BS detects signals in a given poll to a specific device, for example, energy on the radio channel, but it cannot decode the signal, the BS may determine that a collision occurred in the poll. If the BS detects the polled device did not transmit in the poll, it may determine that the polled device is not attempting to enter/re-enter the network. In this example, the BS may terminate the polling process to the device and may choose to poll a different device. If the BS detects there is a collision in a UL allocation of a poll, it may terminate the polling process, change to use a unicast poll, or change to poll a smaller multicast poll group.

A poll from the BS and a poll response from the device may be encoded in the network interface control channel information elements and/or control/management messages, for example, MAP IEs and/or MAC messages in the air interface. The poll and the poll response may be encoded in a separate new MAP IE and/or MAC message, or they may be added as a new use case in some existing MAP IEs and/or MAC messages. Alternatively, this information may also be encoded in an M2M application layer services message exchanged between the M2M Device and the BS or M2M server or gateway.

A poll from the BS may explicitly or implicitly include the following information fields: the identification information of the recipient of the poll and the specification information about the UL allocation of the poll. For the identification information of the recipient of the poll, in a unicast poll example, the identification of the poll recipient may uniquely identify the polled device in the access network. For example, a special M2M device ID may be assigned in the access network specifically for this polling-based network entry/re-entry procedure; a 48-bit universal MAC address may be used; or a special ID may be assigned to the devices in an idle state, such as the DID in 802.16m systems, an IP Address may be used, or a URI may be used. In a multicast poll example, the identification of the poll recipient multicast group may be a pre-assigned group ID, a multicast connection ID, or a flow ID.

For the specification information regarding the UL allocation of the poll, time-domain specifications may include: a superframe index, a frame index, a subframe index, or a symbol index/offset. Frequency-domain specifications may include a subchannel index/offset and a resource block index/offset. A modulation-coding procedure and antenna/multiple-input-multiple-output (MIMO) related parameters may also be included.

A poll response from an M2M device may explicitly or implicitly include the following information fields: the identification information of the sender of the poll response, where similar identifiers may be used in the unicast poll; an indication of its network entry/re-entry attempt; a description of the reason for entering the network, which may be an indicator for a critical widespread exception report; and a UL bandwidth request for further UL transmissions.

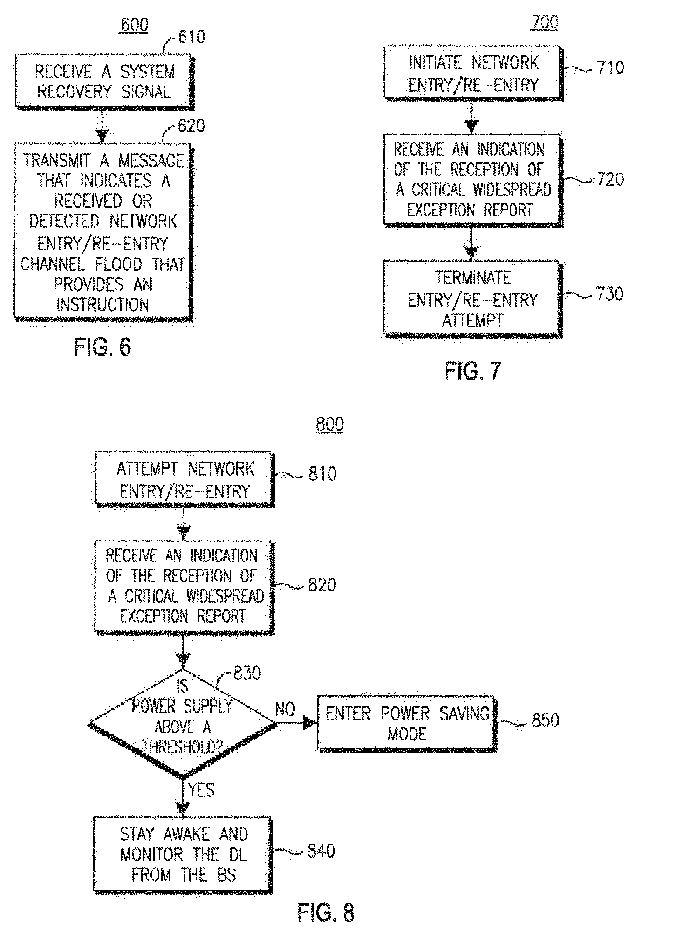

Figure 6 is a diagram of an example method 600 for performing a system notification of a network entry flood. Referring to Figure 6, the BS may receive one or more system recovery signals 610 from network elements on the network side and/or on subscriber side, detect a system recovery, or detect congestion on the network entry/re-entry channels. In response, the BS may transmit a notification to the one or more devices and subscribers to inform them of a perceived or detected network entry/re-entry channel flood 620. The notification may also be used to instruct the one or more devices or subscribers to use a network entry flood control procedure for their network entry/re-entry attempts.

A system notification procedure may encourage a number of devices to connect to an access network successfully in a timely manner, in the event that there may be a flood of network entry attempts, for example, after a system recovery from a critical system exception. The BS may transmit a notification when triggered by one or more pre-defined trigger conditions. Examples of such triggers may include: receiving signals from one or more network elements indicating a system recovery from a critical system-wide exception; receiving one or more signals from one or more WTRUs indicating system recovery from a critical system-wide exception; detecting a system recovery from a critical system-wide exception; and detecting a congestion on the network entry/re-entry channels. Upon receiving a system notification message that indicates a network entry flood, the WTRUs attempting to enter the network may change their network entry procedure from the normal network entry procedure to a network entry flood control procedure.

The system notification indicating a network entry flood may be broadcast to all the subscribers of the BS or multicast to a group of concerned subscribers. The system notification indicating a network entry flood may be encoded in one or more network interface control and/or management messages, for example, MAC messages in the air interface, encoded in separate new MAC messages, or added as new use case in some existing MAC messages, for example, an AAI-RNG-ACK message. Alternatively, this information may be encoded in an M2M application layer services message exchanged between the M2M device and the BS or M2M server or gateway.

In an example where the 802.11 based Wireless LAN system may be used as the access link for the M2M systems, the system notification indicating a network entry flood may be encoded in one or more multicast/broadcast Class-1 management frames. The multicast/broadcast Class-1 management frames may be received by the WTRUs in all possible states, regardless of the authentication and association status. The system notification indicating a network entry flood may be encoded in a separate new Class-1 management frame, or it may be encoded in a new Information Element (IE) and/or information field that may be added to some existing multicast/broadcast Class-1 management frames, for example, a beacon frame, a public action frame, or the like.

Example information fields in the system notification message may include: an identification of the intended recipients, for example, a unicast ID, a broadcast ID, a multicast ID, or a group ID; an identification of the critical widespread exception from which the system has recovered; description information about the critical widespread exception from which the system has recovered; the recommendation of the BS to the recipients regarding actions to take and relevant parameters upon receiving the system notification indicating a network entry flood.

In a network entry flood control procedure, the BS and/or its subscriber stations, including M2M devices and other types of subscribers, may use a network entry/re-entry procedure that differs from the normal network entry/re-entry procedure. The flood control mechanisms may be used to handle bursty network entry/re-entry attempts from a large number of devices. The examples of network entry flood control mechanisms may include but are not limited to: allocating additional network entry/re-entry opportunities temporarily, using a larger initial window of the network entry opportunities; using a larger backup window for network entry RA contention resolution; using a dedicated network entry RA procedure or using a polling-based network entry procedure.

There may be a difference between the system indication procedure and the system notification procedure, wherein the system indication procedure may be used by the BS to inform the devices of its awareness of a critical exception so that the devices still attempting to enter the network to report the same exception may terminate their network entry attempts. The system notification procedure may be used by the BS to inform the devices of its perception or detection of a network entry flood, so that a network entry flood control procedure may be triggered to help a large number of devices connect to the network successfully in a timely manner. The system notification procedure may be used by the BS to transmit a specific instruction to one or more receiving devices to help the devices connect to the network. The specific instruction may vary by device, and may be group based.

Each embodiment may be implemented separately or in any combination. For example, network entry/re-entry with dedicated RA opportunities and polling-based network entry/re-entry may be used in parallel to ensure that the critical system-wide exception reports may be received correctly by the BS. Upon receiving a critical widespread exception report, the BS may transmit a system indication message to avoid congestion in the network entry/re-entry.

The network entry flood control procedure may handle situations where there may be a flood of network entry/re-entry attempts for devices to establish or resume their connectivity to the access network. The network entry flood control procedure may be triggered at the devices by receiving a system notification message indicating a network entry flood or detection by the devices of a network entry flood. Upon receiving a system notification message or self-detecting of a network entry flood, the devices that are attempting to enter the network may terminate their current network entry procedure and start a network entry flood control procedure.

Flood control mechanisms may be used to handle bursty network entry/re-entry attempts from a large number of devices. The examples of network entry flood control mechanisms include: allocation of additional radio resource for the network entry channels temporarily until the congestion at the network entry channels is under control; use of a large initial window of the network entry opportunities and wherein the devices randomly select opportunities to start their network entry attempts, so that their attempts may be evenly distributed over the selected large window; use of a larger backoff window for network entry RA contention resolution if RA is used to initiate the network entry process; use of a dedicated network entry RA procedure; and use of a polling-based network entry procedure.

Figure 7 is a diagram of an example method 700 for performing a network entry/re-entry. Referring to Figure 7, the M2M device may initiate a network entry/re-entry 710. Upon receiving a BS acknowledgement of the reception of a critical widespread exception report 720, the M2M device, may take certain actions to help the congestion control at the RA channels for network entry/re-entry. For example, the M2M device may terminate its network entry/re-entry attempt 730.

Figure 8 is a diagram of another example method 800 for performing a network entry/re-entry. Referring to Figure 8, the M2M device may attempt a network entry/re-entry 810. Upon receiving a BS acknowledgement of the reception of a critical widespread exception report 820, the M2M device may determine that its power supply is above a threshold 830. If the power supply of the M2M device is above a threshold, the M2M device may stay awake and monitor the DL from the BS 840. If the power supply is below a threshold, the M2M device may enter a power saving mode 850.

The M2M device may randomly decide if it should continue its network re-entry attempt with a pre-specified probability of continuation or termination. For example, the M2M device may continue with a probability of k/1000 and it may terminate with a probability of (1000-k)/1000, where k may be an integer in the range (0, 1000). The M2M device may dynamically adjust its RA back-off window. For example, the M2M device may extend its RA back-off window in a large degree, so that the RA retries may be spread in a longer interval. Alternatively, if a second AP is within range the M2M device may select the second AP for network entry.

The system indication message may be encoded in one or more network interface control/management messages, for example, MAC messages in the air interface as defined in 802.16 /WiMAX. The system indication message may be encoded in a separate new MAC message, or it may be added as new use case in an existing MAC message, for example, an AAI-RNG-ACK message in 802.16m. Alternatively, the system indication message may be generated by an M2M application services layer residing on the BS or interfacing with the BS, for example, an M2M server or gateway.

In an example where the 802.11 based Wireless LAN system is used as the access link for the M2M systems, the system indication message may be encoded in multicast/broadcast Class-1 management frames The multicast/broadcast Class-1 management frames may be received by the WTRUs in all possible states, regardless of the authentication and association status. The system indication message may be encoded in a separate new Class-1 management frame, or it may be encoded in a new Information Element (IE) and/or information field that can be added to some existing multicast/broadcast Class-1 management frames, for example, a beacon frame, a public action frame, or the like.

The information fields in the system indication message may include: an identification of the intended recipients, for example, a unicast ID, a broadcast ID, a multicast ID, or a group ID; an identification of the reported critical widespread exception, description information about the reported critical widespread exception; the recommendation of the BS to the recipients regarding actions to take upon receiving the system indication message, for example, to terminate an RA attempt, to continue an RA attempt with a pre-defined probability, to extend the back-off window, or to connect to other BSs/APs as recommended by the current serving BS; the BS assignment of dedicated RA channels to one or more specific devices; and the BS assignment of polls to specific devices.

In another example, an 802.11 based Wireless LAN system may be used as the access link for the M2M system. In this example, an, enhanced 802.11 contention-free (CF) access mechanism may be used as the network entry flood control mechanism. For example, an enhanced CF-Poll/QoS-CF-Poll and/or an enhanced Power Saving Multi-Poll (PSMP) may be used. This example procedure may include enhancements such as: enabling contention-free wireless LAN link access opportunities to be provided to the WTRUs with or without assigned Association Identifiers (AIDs) as specified in 802.11; and providing a new addressing procedure to identify the WTRUs that have previously associated and authenticated with the AP but are currently inactive in accessing the wireless LAN link. In this example, at least 6000 M2M devices may be supported.

In an enhanced CF-Poll/QoS-CF-Poll procedure, the CF-Poll(no data) and QoS CF-Poll (no data) frames may be allowed to transmit to the WTRUs, regardless of the state of the WTRUs. This procedure may provide the WTRUs contention-free link access opportunities to initiate or re-initiate the communication link with the AP. The WTRU for specific link access opportunity assignment may be identified by its MAC address in the Destination Address (DA) field of the CF-Poll/QoS-CF-Poll frame (no data) transmitted by the AP.

In an enhanced PSMP procedure, contention-free link access opportunities may be assigned to one or more WTRUs that may not have an Association ID assigned. In this example, an enhanced PSMP frame may be used to specify the link access opportunity assignments. In an enhanced PSMP frame with individual addresses, each WTRU may be identified by an identifier assigned by the addressing procedure that supports a large number of WTRUs for M2M applications. The supported number of WTRUs may be beyond 2007, the max number of AIDs as specified in 802.11. Such an identifier may be assigned to a WTRU before entering to a power saving mode supporting M2M applications.

An AP may provide the WTRUs contention-free link access opportunities to re-initiate the communication link with the AP and may be based on a re-initiate priority associated with the WTRU. When there are a large number of WTRUs, these priorities may be determined in advance when the WTRUs are in associated mode/state with the AP. In one example, the WTRU and the AP may negotiate a re-initiate priority for the WTRU. In this example, an WTRU may transmit a request to the AP for a certain re-initiate priority and the AP may grant that re-initiate priority or a different re-initiate priority based on a BSS load or one or more BSS operating conditions. The requested re-initiate priority by the WTRU may be based on the supported application, for example, time critical sensor applications; or type of WTRU device, for example, a medical device. Each WTRU may have a unique re-initiate priority where no two WTRUs may have the same re-initiate priority. In another example, the AP may support a set of re-initiate priority levels/groups and a WTRU may be assigned to a specific re-initiate priority level/group.

The network entry flood control mechanisms may be used individually or in combination in a network entry flood control procedure. For example, a large initial network entry opportunity window and a large backoff window for RA contention resolution may be used in combination to spread the initial attempts and retry attempts over time.

The selection of the network entry flood control mechanisms may be indicated in the system notification message indicating a network entry flood, and it may also be pre-defined based on system design decisions.

An M2M device may refer to an M2M subscriber station in an access network, and may be an end-user device, for example, a smart meter, or a concentrator, or a data aggregate point (DAP). A BS may refer to an access point or an attachment point in the access network that connects the subscriber stations to the network, and may be a NodeB or an evolved NodeB in third generation partnership project (3GPP), a BS or an advanced base station in 802.16/WiMAX. A BS may also refer to a BS that supports M2M application layer services locally as well as a BS that interfaces to another entity such as an M2M server or gateway, which supports M2M application layer services.

### EMBODIMENTS

1. A method for use in a base station (BS), the method comprising:
   receiving a trigger from at least one device; and
   on a condition that a widespread exception is imminent, transmitting a system indication to the at least one device.
2. The method of embodiment 1 further comprising:
   determining whether a widespread exception is imminent based on the trigger.
3. The method of embodiment 1 or 2 further comprising:
   determining whether the wireless communication system has recovered.
4. The method of any one preceding embodiment further comprising:
   on a condition that the system has not recovered, transmitting another system indication to the at least one device.
5. The method of any one preceding embodiment, wherein the system indication is transmitted periodically.
6. The method of embodiment 5, wherein the periodic transmission of the system indication is variable.
7. The method of embodiment 5, wherein the periodic transmission of the system indication is dynamic.
8. The method of any one preceding embodiment, wherein the trigger is an exception report.
9. The method of any one preceding embodiment, wherein the trigger is based on receiving a plurality of reports.
10. The method of embodiment 9, wherein the plurality of reports are received from a plurality of M2M devices.
11. The method of embodiment 9 or 10, wherein the plurality of reports are received within a pre-determined window of time.
12. The method of any one preceding embodiment, wherein the trigger is based on receiving a plurality of messages of a specific type.
13. The method of embodiment 12, wherein the plurality of messages of a specific type are of the same type.
14. The method of embodiment 12 or 13, wherein the plurality of messages of a specific type are of different types.
15. The method of any one of embodiments 12-14, wherein the plurality of messages are received within a pre-determined window of time.
16. The method of any one preceding embodiment, wherein the at least one device comprise one or more devices of the same type.
17. The method of any one of embodiments 1-15, wherein the at least one device comprise one or more devices of different types.
18. The method of any one preceding embodiment, wherein the at least one device is a wireless transmit/receive unit (WTRU).
19. The method of any one preceding embodiment, wherein the at least one device is a network entity.
20. The method of any one preceding embodiment, wherein the at least one device is a machine-to-machine (M2M) server.
21. The method of any one preceding embodiment, wherein the at least one device is a machine-to-machine (M2M) gateway.
22. A base station (BS) comprising:
   a receiver configured to receive a trigger from the at least one device; and
   a transmitter configured to transmit a system indication to the at least one device on a condition that a widespread exception is imminent.
23. The BS of embodiment 22 further comprising:
   a processor configured to determine whether a widespread exception is imminent based on the trigger.
24. The BS of embodiment 23, wherein the processor is further configured to determine whether the wireless communication system has recovered.
25. The BS of any one of embodiments 22-24, wherein the transmitter is further configured to transmit another system indication to the at least one device.
26. The BS of any one of embodiments 22-25, wherein the transmitter is further configured to transmit another system indication on a condition that the system has not recovered.
27. The BS of any one of embodiments 22-26, wherein the system indication is transmitted periodically.
28. The BS of embodiment 27, wherein the periodic transmission of the system indication is variable.
29. The BS of embodiment 27, wherein the periodic transmission of the system indication is dynamic.
30. The BS of any one of embodiments 22-29, wherein the trigger is an exception report.
31. The BS of any one of embodiments 22-30, wherein the trigger is based on receiving a plurality of reports.
32. The BS of embodiment 31, wherein the plurality of reports are received from a plurality of M2M devices.
33. The BS of embodiment 31 or 32, wherein the plurality of reports are received within a pre-determined window of time.
34. The BS of any one of embodiments 22-33, wherein the trigger is based on receiving a plurality of messages of a specific type.
35. The BS of embodiment 34, wherein the plurality of messages of a specific type are of the same type.
36. The BS of embodiment 34 or 35, wherein the plurality of messages of a specific type are of different types.
37. The BS of any one of embodiments 34-36, wherein the plurality of messages are received within a pre-determined window of time.
38. The BS of any one of embodiments 22-37, wherein the at least one device comprise one or more devices of the same type.
39. The BS of any one of embodiments 22-37, wherein the at least one device comprise one or more devices of different types.
40. The BS of any one of embodiments 22-39, wherein the at least one device is a wireless transmit/receive unit (WTRU).
41. The BS of any one of embodiments 22-40, wherein the at least one device is a network entity.
42. The BS of any one of embodiments 22-41, wherein the at least one device is a machine-to-machine (M2M) server.
43. The BS of any one of embodiments 22-42, wherein the at least one device is a machine-to-machine (M2M) gateway.
44. A method for use in a wireless transmit/receive unit (WTRU), the method comprising:
   attempting a network entry procedure; and
   receiving an indication of a widespread exception report from a base station (BS).
45. The method of embodiment 44 further comprising:
   in response to the indication, terminating the network entry procedure.
46. The method of embodiment 44 or 45 further comprising:
   entering a power saving mode in response to the indication.
47. The method of any one of embodiments 44-46 further comprising:
   determining whether a power supply of the WTRU is above a threshold.
48. The method of any one of embodiments 44-47 further comprising:
   on a condition that a power supply is above a threshold, entering a power saving mode.
49. The method of any one of embodiments 44-47 further comprising:
   on a condition that the power supply is below a threshold, remaining awake and monitoring a downlink (DL) channel from the BS.
50. A wireless transmit/receive unit (WTRU) comprising:
   a processor configured to attempt a network entry procedure; and
   a receiver configured to receive an indication of a widespread exception report from a base station (BS).
51. The WTRU of embodiment 50, wherein the processor is further configured to terminate the network entry procedure in response to the indication.
52. The WTRU of embodiment 50 or 51, wherein the processor is configured to enter a power saving mode in response to the indication.
53. The WTRU of any one of embodiments 50-52, wherein the processor is further configured to determine whether a power supply of the WTRU is above a threshold.
54. The WTRU of any one of embodiments 50-53, wherein the processor is further configured to enter a power saving mode.
55. The WTRU of embodiment 54, wherein on a condition that the power supply is above a threshold, the processor is further configured to enter a power saving mode.
56. The WTRU of embodiment 19, wherein the processor is further configured to remain awake and monitor a downlink (DL) channel from the BS on a condition that the power supply is below a threshold.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.
A1. A method for use in a base station (BS), the method comprising: receiving an event indication message from one device of a plurality of devices in communication with the BS;
   determining, based on the event indication message, whether a widespread exception event is imminent, wherein a widespread exception event is an event that will result in the plurality of devices in communication with the BS losing communication with the BS; and
   on a condition that a widespread exception event is imminent, transmitting a first system indication message to at least the one device, wherein the system indication message indicates that the plurality of devices in communication with the BS should cease transmitting event indication messages to the BS.
A2. The method of embodiment A1 further comprising:
   determining whether the BS has recovered from the widespread exception event; and
   on a condition that the BS has not recovered from the widespread exception event, transmitting a second system indication message to at least one of the plurality of devices.
A3. The method of embodiment A1, wherein the system indication message is transmitted periodically.
A4. The method of embodiment A1, wherein the event indication message is an exception report.
A5. The method of embodiment A1, wherein the first system indication message is transmitted by the BS based on the BS receiving a plurality of exception reports from a plurality of devices within a pre-determined time period.
A6. The method of embodiment A1, wherein the first system indication message is transmitted by the BS based on the BS receiving a plurality of messages of a specific type within a pre-determined time period.
A7. A base station (BS) comprising:
   a receiver configured to receive an event indication message from one device of a plurality of devices in communication with the BS;
   a processor configured to determine whether a widespread exception event is imminent based on the event indication message, wherein a widespread exception event is an event that will result in the plurality of devices m communication with the BS losing communication with the BS; and
   a transmitter configured to transmit, on a condition that a widespread exception event is imminent, a first system indication message to at least the one device, wherein the system indication message indicates that the plurality of devices in communication with the BS should cease transmitting event indication messages to the BS.
A8. The BS of embodiment A7, wherein the processor is further configured to determine whether the BS has recovered from the widespread exception event, and wherein the transmitter is further configured to transmit, on a condition that the BS has not recovered, a second system indication message to at least one of the plurality of devices.
A9. The BS of embodiment A7, wherein the system indication message is transmitted periodically.
A10. The BS of embodiment A7, wherein the event indication message is an exception report.
A11. The BS of embodiment A7, wherein the transmitter is further configured to transmit the first system indication message based on the BS receiving a plurality of exception reports from a plurality of devices within a pre-determined time period.
A12. The BS of embodiment A7, wherein the transmitter is further configured to transmit the first system indication message based on the BS receiving a plurality of messages of a specific type within a pre-determined time period.
A13. A method for use in a wireless transmit/receive unit (WTRU), the method comprising:
   initiating a network entry procedure to gain access to a base station (BS);
   receiving, from the BS, a system indication message that indicates a widespread exception event, wherein the widespread exception event is an event that will result in a plurality of devices in communication with the BS losing communication with the BS;
   in response to receiving the system indication message, terminating the network entry procedure.
A14. The method of embodiment A13 further comprising:
   entering a power saving mode in response to the system indication message.
A15. The method of embodiment A13 further comprising:
   determining whether a power supply of the WTRU is above a threshold; and
   on a condition that the power supply is above a threshold, entering a power saving mode.
A16. The method of embodiment A15 further comprising:
   on a condition that the power supply is below a threshold, remaining awake and monitoring a downlink (DL) channel from the BS.
A17. A wireless transmit/receive unit (WTRU) comprising:
   a processor configured to initiate a network entry procedure;
   a receiver configured to receive a system indication message from a base station (BS), wherein the system indication message indicates a widespread exception event, wherein the widespread exception event is an event that will result in a plurality of devices in communication with the BS losing communication with the BS; and
   wherein the processor is further configured to terminate the network entry procedure in response to the system indication message.
A18. The WTRU of embodiment A17, wherein the processor is configured to enter a power saving mode in response to the system indication message.
A19. The WTRU of embodiment A17, wherein the processor is further configured to determine whether a power supply of the WTRU is above a threshold and enter a power saving mode on a condition that the power supply is above a threshold.
A20. The WTRU of embodiment A19, wherein the processor is further configured to remain awake and monitor a downlink (DL) channel from the BS on a condition that the power supply is below a threshold.

## Claims

1. A method for use in a base station in a system, the method comprising:
determining that a widespread exception event is imminent;
transmitting a system indication message to devices in communication with the base station, based on determining that the widespread exception event is imminent;
determining whether the system has recovered from the widespread exception event; and
if the system has not recovered, continuing to transmit the system indication message to devices in communication with the base station, and
if the system has recovered, resuming normal operation.

2. The method of claim 1, further comprising receiving a trigger that indicates that the widespread exception event in the system may be imminent, wherein the trigger is a report from one or more of the devices.

3. The method of claim 1, further comprising receiving a trigger that indicates that the widespread exception event in the system may be imminent, wherein the trigger is a report from the system network.

4. The method of claim 1, wherein the system indication message triggers the devices to take actions to reduce loading on a network entry channel.

5. The method of claim 1, wherein the system indication message is transmitted as a broadcast message.

6. The method of claim 5, wherein the system indication message is transmitted periodically until the system has recovered.

7. The method of claim 1, wherein the base station determines that the system has recovered based on detecting the number of collisions on a network entry channel.

8. The method of claim 1, wherein the base station determines that the system has recovered based on receiving a message from the system network.

9. A base station for use in a base station in a system, the base station comprising:
a processor configured to determine that a widespread exception event is imminent; and
a transmitter to transmit a system indication message to devices in communication with the base station based on determining that the widespread exception event is imminent;
wherein the processor determines whether the system has recovered from the widespread exception event, and
if the system has not recovered, the base station continues to transmit the system indication message to devices in communication with the base station, and
if the system has recovered, the base station resumes normal operation.

10. The base station of claim 9, wherein the base station receives a trigger that indicates that the widespread exception event in the system may be imminent, wherein the trigger is a report from one or more of the devices.

11. The base station of claim 9, wherein the base station receives a trigger that indicates that the widespread exception event in the system may be imminent, wherein the trigger is a report from the system network.

12. The base station of claim 9, wherein the system indication message triggers the devices to take actions to reduce loading on a network entry channel.

13. The base station of claim 9, wherein the base station determines that the system has recovered based on detecting the number of collisions on a network entry channel.

14. The base station of claim 9, wherein the base station determines that the system has recovered based on receiving a message from the system network.

15. The base station of claim 9, further comprising, if the system has recovered, the base station instructing the devices regarding network entry.
